# EUROPEAN PATENT SPECIFICATION

(11) **EP 3 088 668 B1**
(45) Date of publication and mention of the grant of the patent: **12.12.2018**
(21) Application number: 16155591.7
(22) Date of filing: 12.02.2016
(51) Int. Cl.: F01D 5/18, F01D 25/12, F01D 5/14, F01D 9/04

(54) **COOLING HOLE PATTERNED AIRFOIL**
TURBINENSCHAUFEL MIT KÜHLUNGSLOCHMUSTER
PROFIL AÉRODYNAMIQUE À MOTIFS À TROUS DE REFROIDISSEMENT

(30) Priority: 13.04.2015 US 201514685410
(43) Date of publication of application: 02.11.2016
(73) Proprietor: United Technologies Corporation, Farmington, CT 06032 (US)
(72) Inventor: SPANGLER, Brandon W., Vernon, CT 06066 (US); CAVALLO, Gina, Watertown, CT 06795 (US)
(74) Representative: Dehns

(56) References cited:
- WO-A1-2014/007961
- GB-A- 2 455 899
- US-A1- 2009 155 050

## Description

### FIELD

The present disclosure relates generally to airfoils for gas turbine engine, and more specifically, to an airfoil having an offset herringbone cooling hole pattern.

### BACKGROUND

In a gas turbine engine, rotor and/or stator airfoils have cooling holes in their surfaces to allow cooling air to pass from cavities inside the airfoil and out through the cooling holes, cooling the airfoil. Groups of cooling holes may point in different directions. However, because the cooling holes point in different directions, areas of the airfoil may not receive cooling air. Such areas may be insufficiently cooled and subject to early wear and/or failure.

A prior art airfoil and method of forming the same having the features of the preamble to claims 1 and 4 is disclosed in US 2009/155050. Another prior art airfoil and method of forming the same is disclosed in GB 2 455 899.

### SUMMARY

From one aspect, the present invention provides an airfoil in accordance with claim 1.

In various embodiments, the second transition boundary radial position does not equal (differs by more than one-half pitch from) the first transition boundary radial position.

The cooling hole pattern may include a third filmrow. The third filmrow may include a third radially outward facing portion having cooling holes oriented radially outward of the engine central longitudinal axis and over the surface of the airfoil. The third filmrow may include a third radially inward facing portion having cooling holes oriented radially inward toward the engine central longitudinal axis and over the surface of the airfoil. The third filmrow may further include a third transition boundary having a point equidistant between the third radially outward facing portion and the third radially inward facing portion, and a third transition boundary radial position including a radial distance of the third transition boundary from the engine central longitudinal axis.

In various embodiments, the third transition boundary radial position does not equal (differs by more than one-half pitch from) the first transition boundary radial position and the third transition boundary radial position does not equal (differs by more than one-half pitch from) the second transition boundary radial position.

The cooling hole pattern may include a fourth filmrow. The fourth filmrow may include a fourth radially outward facing portion including cooling holes oriented radially outward of the engine central longitudinal axis and over the surface of the airfoil, and a fourth radially inward facing portion including cooling holes oriented radially inward toward the engine central longitudinal axis and over the surface of the airfoil. The fourth filmrow may include a fourth transition boundary having a point equidistant between the fourth radially outward facing portion and the fourth radially inward facing portion and a fourth transition boundary radial position including a radial distance of the fourth transition boundary from the engine central longitudinal axis.

In various embodiments, the third transition boundary radial position equals the (differs by no more than one-half pitch from) first transition boundary radial position whereby the first filmrow and the third filmrow form a first aligned set, and the second transition boundary radial position equals (differs by no more than one-half pitch from) the fourth transition boundary radial position whereby the second filmrow and the fourth filmrow form a second aligned set.

Furthermore the airfoil may include a stator vane or a rotor blade.

From another aspect the present invention provides a method of forming an airfoil in accordance with claim 4.

The transition boundary radial position of each filmrow may different from (differs by more than one-half pitch from) one adjacent filmrow whereby the plurality of filmrows have non-contiguous adjacent transition boundary radial positions. Furthermore, the transition boundary radial position of each filmrow may be different from (differs by more than one-half pitch from) two adjacent filmrows whereby the plurality of filmrows have non-contiguous adjacent transition boundary radial positions. Moreover, the transition boundary radial position of each filmrow may be different from (differs by more than one-half pitch from) every other filmrow whereby the plurality of filmrows have non-contiguous adjacent transition boundary radial positions.

### BRIEF DESCRIPTION OF THE DRAWINGS

The subject matter of the present disclosure is particularly pointed out and distinctly claimed in the concluding portion of the specification. A more complete understanding of the present disclosure, however, is best be obtained by referring to the detailed description and claims when considered in connection with the drawing figures, wherein like numerals denote like elements.
FIG. 1 illustrates a cross-sectional view of an exemplary gas turbine engine, according to various embodiments;
FIG. 2 illustrates example airfoils including a rotor and a stator, according to various embodiments;
FIG. 3A illustrates an example airfoil having an offset herringbone cooling hole pattern, according to various embodiments;
FIG. 3B illustrates an example airfoil having an offset herringbone cooling hole pattern on a leading edge of the example airfoil, according to various embodiments;
FIG. 4A illustrates an example airfoil having an offset herringbone cooling hole pattern with emphasis on various transition boundaries, according to various embodiments; and
FIG. 4B illustrates an example airfoil having an offset herringbone cooling hole pattern on a leading edge of the example airfoil and with emphasis on various transition boundaries, according to various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice embodiments of the disclosure, it should be understood that other embodiments may be realized and that logical changes and adaptations in design and construction may be made in accordance with this invention and the teachings herein. Thus, the detailed description herein is presented for purposes of illustration only and not limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Furthermore, any reference to singular includes plural embodiments, and any reference to more than one component or step may include a singular embodiment or step. Surface shading lines may be used throughout the figures to denote different parts but not necessarily to denote the same or different materials.

As used herein, "pressure side" of an airfoil means the side of the airfoil having a shorter length and/or proximate to slower moving fluid and/or fluid at higher pressure as compared to the "suction side" of the airfoil. "Suction side" of an airfoil means the side of the airfoil having a longer length and/or proximate to faster moving fluid and/or fluid at a lower pressure as compared to the "pressure side" of the airfoil. Pointing or oriented "radially outward" means having a vector component extending at least partially radially outward, such as oriented to direct cooling air at least partially radially outward. Pointing "radially inward" means having a vector component extending at least partially radially inward, such as oriented to direct cooling air at least partially radially inward. Similarly, as used herein a "first direction" and a "second direction" comprise directions having a vector component extending at least partially in opposite directions, such as wherein the statement pointing in a "first direction" means having a vector component extending at least partially opposite the "second direction."

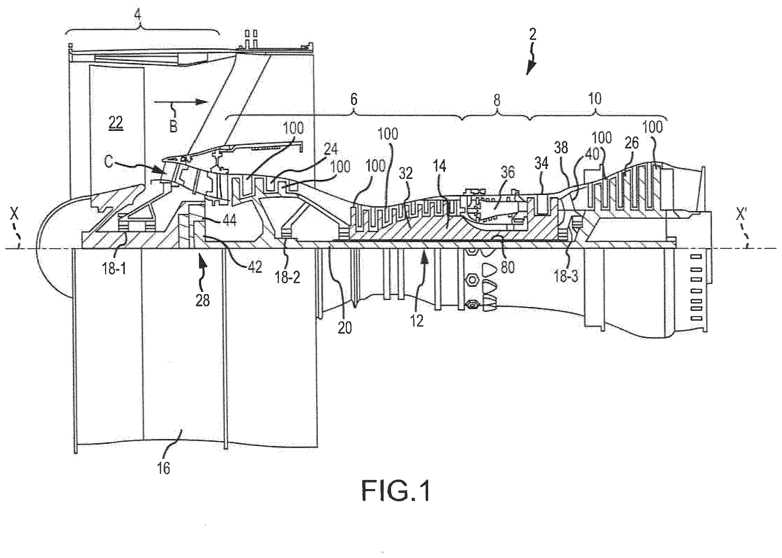

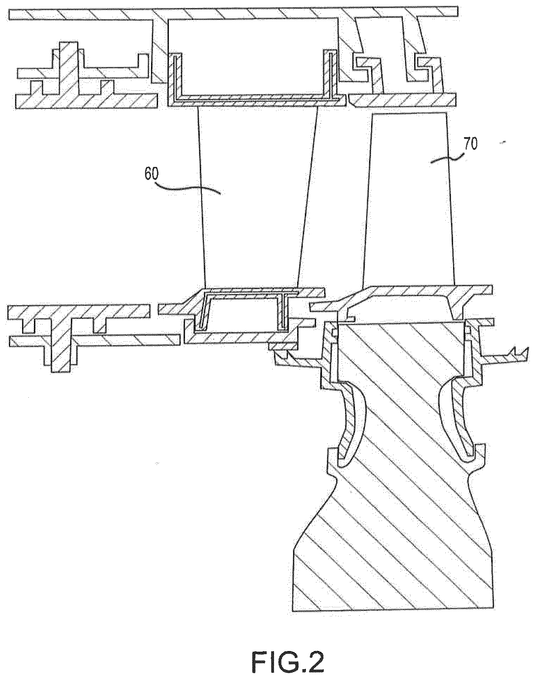

With reference to FIGs. 1 and 2, an exemplary gas turbine engine 2 is provided. Gas turbine engine 2 is a two-spool turbofan that generally incorporates a fan section 4, a compressor section 6, a combustor section 8 and a turbine section 10. Alternative engines include, for example, an augmentor section among other systems or features. In operation, fan section 4 drives air along a bypass flow-path B while compressor section 6 drives air along a core flow-path C for compression and communication into combustor section 8 then expansion through turbine section 10. Although depicted as a turbofan gas turbine engine 2 herein, it should be understood that the concepts described herein are not limited to use with turbofans as the teachings is applicable to other types of turbine engines including three-spool architectures.

Gas turbine engine 2 generally comprises a low speed spool 12 and a high speed spool 14 mounted for rotation about an engine central longitudinal axis X-X' relative to an engine static structure 16 via several bearing systems 18-1, 18-2, and 18-3. It should be understood that bearing systems is alternatively or additionally provided at locations, including for example, bearing system 18-1, bearing system 18-2, and bearing system 18-3.

Low speed spool 12 generally comprises an inner shaft 20 that interconnects a fan 22, a low pressure compressor section 24, e.g., a first compressor section, and a low pressure turbine section 26, e.g., a second turbine section. Inner shaft 20 is connected to fan 22 through a geared architecture 28 that drives the fan 22 at a lower speed than low speed spool 12. Geared architecture 28 comprises a gear assembly 42 enclosed within a gear housing 44. Gear assembly 42 couples the inner shaft 20 to a rotating fan structure. High speed spool 14 comprises an outer shaft 80 that interconnects a high pressure compressor section 32, e.g., second compressor section, and high pressure turbine section 34, e.g., first turbine section. A combustor 36 is located between high pressure compressor section 32 and high pressure turbine section 34. A mid-turbine frame 38 of engine static structure 16 is located generally between high pressure turbine section 34 and low pressure turbine section 26. Mid-turbine frame 38 supports one or more bearing systems 18, such as 18-3, in turbine section 10. Inner shaft 20 and outer shaft 80 is concentric and rotates via bearing systems 18 about the engine central longitudinal axis X-X', which is collinear with their longitudinal axes. As used herein, a "high pressure" compressor or turbine experiences a higher pressure than a corresponding "low pressure" compressor or turbine.

The core airflow C is compressed by low pressure compressor section 24 then high pressure compressor section 32, mixed and burned with fuel in combustor 36, then expanded over high pressure turbine section 34 and low pressure turbine section 26. Mid-turbine frame 38 includes airfoils 40, which are in the core airflow path. Turbines 26, 34 rotationally drive the respective low speed spool 12 and high speed spool 14 in response to the expansion.

Gas turbine engine 2 is, for example, a high-bypass geared aircraft engine. The bypass ratio of gas turbine engine 2 is optionally greater than about six (6). The bypass ratio of gas turbine engine 2 is optionally greater than ten (10). Geared architecture 28 is an epicyclic gear train, such as a star gear system, e.g., sun gear in meshing engagement with a plurality of star gears supported by a carrier and in meshing engagement with a ring gear, or other gear system. Geared architecture 28 has a gear reduction ratio of greater than about 2.3 and low pressure turbine section 26 has a pressure ratio that is greater than about five (5). The bypass ratio of gas turbine engine 2 is greater than about ten (10:1). The diameter of fan 22 is significantly larger than that of the low pressure compressor section 24, and the low pressure turbine section 26 has a pressure ratio that is greater than about 5:1. Low pressure turbine section 26 pressure ratio is measured prior to inlet of low pressure turbine section 26 as related to the pressure at the outlet of low pressure turbine section 26 prior to an exhaust nozzle. It should be understood, however, that the above parameters are exemplary of a suitable geared architecture engine and that the present disclosure contemplates other turbine engines including direct drive turbofans.

The next generation of turbofan engines is designed for higher efficiency, which is associated with higher pressure ratios and higher temperatures in the high speed spool 14 and other engine sections. These higher operating temperatures and pressure ratios create operating environments that cause thermal loads that are higher than thermal loads conventionally encountered. Operating conditions in high pressure compressor section 32 are often approximately 1400°F (approximately 760°C) or more, and operating conditions in combustor 36 are often higher. Moreover, prior cooling hole arrangements permit regions of localized temperature excursions, such as due to regions that are insufficiently convectively cooled due to the orientation of the cooling holes. Various systems to address these challenges are presented herein.

Airfoils may have cooling holes arranged in rows and each row may have at least one cooling hole pointing in a radially outward direction and at least one cooling hole pointing in a radially inward direction relative to the engine central longitudinal axis. Various regions of the airfoil, such as the leading edge, rely on the convection in the cooling hole to reduce temperature of the airfoil and/or other proximate structures; however, multiple rows of cooling holes often transition from groups of cooling holes pointing radially outwardly and groups of cooling holes pointing radially inwardly at various positions. As such, by staggering the transition of multiple rows of cooling holes from groups pointing radially outward and groups pointing radially inward the effectiveness of the convective cooling proximate to the transitions may be enhanced.

Stated differently, the present disclosure contemplates considering cooling hole orientation. For instance, for cooling holes arranged in rows ("filmrows"), each filmrow is divided into groups of cooling holes. A first group may be oriented to direct cooling air leaving the cooling hole generally radially outward relative to the engine central longitudinal axis over a surface of the airfoil, whereas a second group may be oriented to direct cooling air leaving the cooling hole generally radially inward relative to the engine central longitudinal axis and over a surface of the airfoil 100. Between the first group and the second group of cooling holes in each filmrow, a transition region exists. The transition region is the space between the first group and the second group wherein the cooling holes of that filmrow do not generally direct cooling air. For instance, the transition region is bounded at one end by cooling holes oriented to direct cooling air leaving the cooling holes generally radially outward relative to the engine central longitudinal axis over a surface of the airfoil and at the other end by cooling holes oriented to direct cooling air leaving the cooling holes generally radially inward relative to the engine central longitudinal axis over a surface of the airfoil. Intentionally staggering the transition regions of adjacent filmrows tends to enhance the effectiveness of the convective cooling proximate to the transition regions by permitting the cooling air flowing from adjacent filmrows to cool each other's transition region.

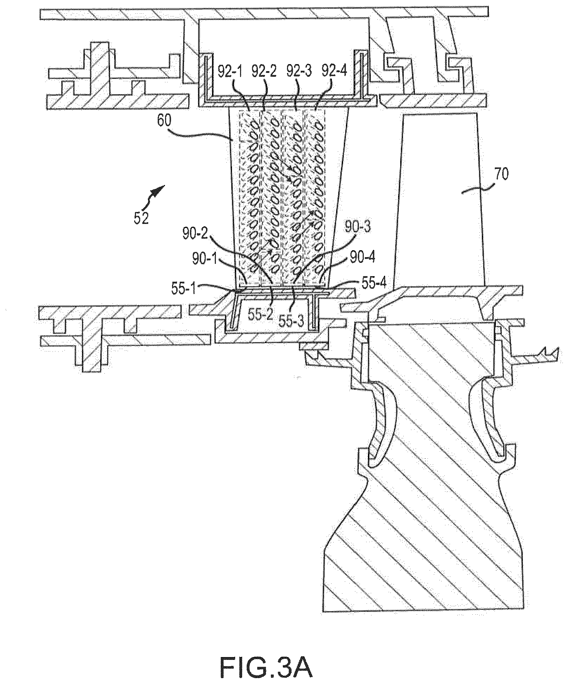

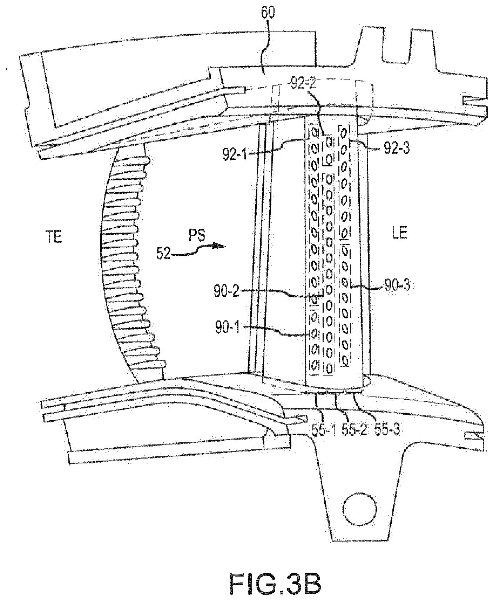

With reference to FIGS. 1 and 2, an airfoil 100 of an engine 2 may comprise a rotor blade 70 or a stator vane 60. While various aspects are described herein with reference to stator vanes 60, such as cooling hole pattern 52 (with brief reference to FIGs. 3-4), such aspects may be incorporated into rotor blades 70 in lieu of or in addition to stator vanes 60, as desired, and may be positioned on the leading edge, pressure side, and/or suction side of the airfoil 100.

For example, the transition region of each filmrow may be positioned at a different radial distance from the engine central longitudinal axis (e.g., center of a cross-sectional plane of the engine 2), so that the transition region of adjacent filmrows do not align. In various embodiments, the transition region of alternating (e.g., every other) filmrows may align (first aligned set), while the transition region of the interleaved set of alternating (e.g., every other) filmrow may align (second aligned set), yet the aligned transition regions of the first aligned set and the aligned transition regions of the second aligned set may be positioned at a different radial distance from the center of a cross-sectional plane of the engine 2. In various embodiments, the transition region of every third filmrow may align, so that there is a first aligned set, a second aligned set, and a third aligned set. Thus, one may appreciate, that numerous arrangements are contemplated wherein a given filmrow is flanked by adjacent filmrows having transition regions located at different radial distances from the engine central longitudinal axis than the given filmrow. Thus, a portion of cooling air from a filmrow may pass over and cool the transition region of one or more adjacent filmrows.

With reference now to FIGs. 2, 3A, and 3B, a cooling hole pattern 52 is disclosed. In various embodiments the cooling hole pattern 52 may comprise an arrangement of cooling holes into filmrows 55 configured to convectively cool the airfoil 100. For instance, the cooling hole pattern 52 may comprise one or more filmrows 55. The cooling hole pattern 52 may comprise a first filmrow 55-1, a second filmrow 55-2, a third filmrow 55-3, and a fourth filmrow 55-4 (FIG. 3A). While four filmrows are depicted in FIG. 3A and three filmrows are depicted in FIG. 3B for illustration purposes, one may appreciate that any number of filmrows configured to accomplish a desired cooling on a desired airfoil may be implemented.

Each filmrow 55-1, 55-2, 55-3, 55-4 may comprise a radially outward facing portion 90 and a radially inward facing portion 92. For instance, the cooling holes of each filmrow may be arranged into a row with cooling holes oriented to direct cooling air from a channel inside the airfoil through and out of the surface of the airfoil. Relative to the engine central longitudinal axis (e.g., geometric center of a cross-sectional plane of the engine 2 bisecting the stator vane 60), the radially outward facing portion 90 may comprise cooling holes oriented to direct cooling air generally radially outward from the engine central longitudinal axis. Similarly, the radially inward facing portion 92 may comprise cooling holes oriented to direct cooling air generally radially inward toward the engine central longitudinal axis. Because each filmrow 55-1, 55-2, 55-3, 55-4 may comprise a radially outward facing portion 90 and a radially inward facing portion 92, the first filmrow 55-1 may comprise a first radially outward facing portion 90-1 and a first radially inward facing portion 92-1, the second filmrow 55-2 may comprise a second radially outward facing portion 90-2 and a second radially inward facing portion 92-2, the third filmrow 55-3 may comprise a third radially outward facing portion 90-3 and a third radially inward facing portion 92-3, and the fourth filmrow 55-4 may comprise a fourth radially outward facing portion 90-4 and a fourth radially inward facing portion 92-4.

In various embodiments, each radially outward facing portion 90-1, 90-2, 90-3, 90-4, is disposed radially inward of each corresponding radially inward facing portion 92-1, 92-2, 92-3, 92-4. However, in various embodiments, each radially outward facing portion may be disposed radially outward of each corresponding radially inward facing portion. In various embodiments, the radially outward facing portion may be disposed radially outward of a corresponding radially inward facing portion of one adjacent filmrow, and radially inward of another adjacent filmrow. Thus, various arrangements are contemplated as desired to facilitate substantially uniform convective cooling of the airfoil.

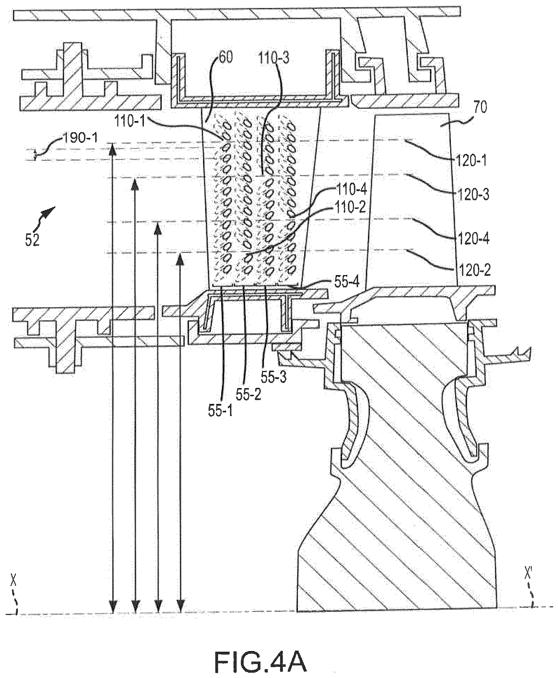

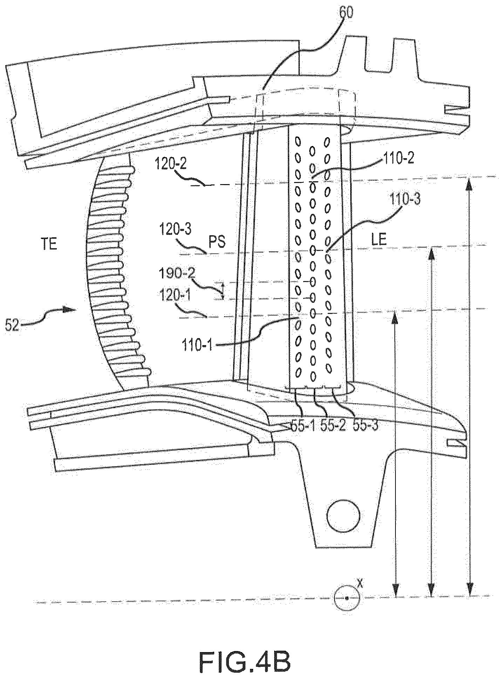

Each filmrow 55-1, 55-2, 55-2, 55-4 may further comprise a transition boundary. With reference to FIGs. 4A-B, for example, first filmrow 55-1 may comprise a first transition boundary 110-1, second filmrow 55-2 may comprise a second transition boundary 110-2, third filmrow 55-3 may comprise a third transition boundary 110-3 and forth filmrow 55-4 may comprise a fourth transition boundary 110-4 (FIG. 4A). A transition boundary may comprise a point centered equidistant between the mesial ends of a radially outward facing portion of a filmrow and a radially inward facing portion of the same filmrow. For instance, first transition boundary 110-1 may be a point located equidistant between the mesial end of first radially inward facing portion 92-1 and first radially outward facing portion 90-1 of the first filmrow 55-1. Second transition boundary 110-2 may be a point located equidistant between the mesial end of second radially inward facing portion 92-2 and second radially outward facing portion 90-2 of the second filmrow 55-2. Third transition boundary 110-3 may be a point located equidistant between the mesial end of third radially inward facing portion 92-3 and third radially outward facing portion 90-3 of the third filmrow 55-3. Fourth transition boundary 110-4 may be a point located equidistant between the mesial end of fourth radially inward facing portion 92-4 and fourth radially outward facing portion 90-4 of the fourth filmrow 55-4.

With continued reference to both FIGs. 3A-B and 4A-B, but with particular focus on FIGs. 4A-B, each filmrow may comprise a transition boundary radial position. For example, first filmrow 55-1 may comprise a first transition boundary radial position 120-1, second filmrow 55-2 may comprise a second transition boundary radial position 120-2, third filmrow 55-3 may comprise a third transition boundary radial position 120-3 and fourth filmrow 55-4 may comprise a fourth transition boundary radial position 120-4. A transition boundary radial position may comprise the radial distance of the corresponding transition boundary from the engine central longitudinal axis. Different filmrows may have different transition boundary radial positions. For instance, the transition boundary radial position of each filmrow may be positioned a different radial distance from the engine central longitudinal axis, so that the transition regions of adjacent filmrows do not align. In various embodiments, the transition boundary radial position of alternating (e.g., every other) filmrow may align (first aligned set), while the transition boundary radial position of interposed alternating (e.g., every other) filmrows may align (second aligned set), yet the aligned transition regions of the first aligned set and the aligned transition regions of the second aligned set may be positioned a different radial distance from the engine central longitudinal axis. As such a non-contiguous adjacent transition boundary radial position may mean that the transition boundary radial position of each filmrow is different from at least one other filmrow, or is different from one adjacent filmrow, or is different from two adjacent filmrows, or is different from every other filmrow, or the like.

Thus, as depicted in FIG. 4A-B, a first filmrow 55-1 may comprise a first transition boundary radial position 120-1 that is located a different distance from the engine central longitudinal axis than the second transition boundary radial position 120-2 of the second filmrow 55-2. Moreover, FIGs. 4A-B depicts a third filmrow 55-3 with a third transition boundary radial position 120-3 that is located a different distance from the engine central longitudinal axis than both the first transition boundary radial position 120-1 and the second transition boundary radial position 120-3. Finally, FIG. 4A depicts a fourth filmrow 55-4 may have a fourth transition boundary radial position 120-4 that is located a different distance from the engine central longitudinal axis than the first transition boundary radial position 120-1, the second transition boundary radial position 120-2 and the third transition boundary radial position 120-3.

While each transition boundary radial position is depicted as a unique distance from the engine central longitudinal axis, in various embodiments, various transition boundary radial positions are located various distances from the engine central longitudinal axis so that non-adjacent transition boundary radial positions align. For instance, in various embodiments, each transition boundary radial position is disposed at a different distance from the engine central longitudinal axis than at least one adjacent transition boundary radial position. For instance, referring again to FIGs. 4A-B, the first transition boundary radial position 120-1 of a first filmrow 55-1 is disposed a different distance from the engine central longitudinal axis than the second transition boundary radial position 120-2 of the second filmrow 55-1. The third transition boundary radial position 120-3 of the third filmrow 55-1 may alternatively be disposed the same distance from the engine central longitudinal axis as the first transition boundary radial position 120-1 or may be disposed a different distance from the engine central longitudinal axis as both the first transition boundary radial position 120-1 and the second transition boundary radial position 120-2. As such, various embodiments are contemplated comprising filmrows 55-1, 55-2, 55-3, and 55-4 comprising non-contiguous adjacent transition boundary positions. In this manner, cooling air flowing from adjacent filmrows may variously cool adjacent transition boundaries through either convection from adjacent filmrows or film from upstream rows.

As used herein, "does not equal" as may be used in statements such as "wherein the second transition boundary radial position does not equal the first transition boundary radial position," means that the second transition boundary radial position and the first transition boundary radial position differ by greater than one-half the radial distance between individual cooling holes of a radially outward facing portion and/or radially inward facing portion of a filmrow. Such transition boundary radial positions may be said to differ by greater than "one-half pitch." Similarly, "the same distance" may mean equal to or less than "one-half pitch" while "a different distance" may mean to differ by greater than "one-half pitch." FIGs. 4A-B depict distances 190-1, 190-2 which each comprise one-whole pitch, or stated differently, which each comprise a radial distance between individual cooling holes of a radially outward facing portion and/or radially inward facing portion of a film row. One-whole pitch, divided by two, equals "one-half pitch."

With reference to FIGs. 1-4B, having discussed aspects of an airfoil 100 such as a stator vane 60 and a rotor blade 70, an airfoil 100 may be made of various materials. For instance, an airfoil 100 may be made of a single material, or different materials, or combinations of materials. For example, components of the system are made from metal. For example, aspects of an airfoil 100 are metal, such as nickel, cobalt, molybdenum, titanium, aluminum, steel, or stainless steel, though it alternatively comprises numerous other materials configured to provide support. Components of the system are optionally made from other materials such as, for example, composite, ceramic, plastics, polymers, alloys, glass, binder, epoxy, polyester, acrylic, or any material or combination of materials having desired material properties, such as heat tolerance, strength, stiffness, or weight. Portions of an airfoil 100 as disclosed herein are optionally made of different materials or combinations of materials, and/or comprise coatings. Moreover, components of the airfoil 100 are in some instances mixtures of different materials according to different ratios, gradients, and the like.

An airfoil 100 thus has multiple materials, or any material configuration suitable to enhance or reinforce the resiliency and/or support of the system when subjected to wear in an aircraft operating environment or to satisfy other desired electromagnetic, chemical, physical, or material properties, for example coefficient of thermal expansion, ductility, weight, flexibility, strength, or heat tolerance.

One such material is an austenitic nickel-chromium-based alloy such as Inconel®, which is available from Special Metals Corporation of New Hartford, New York, USA. Other such material includes ceramic matrix composite (CMC). Further material includes refractory metal, for example, an alloy of titanium, such as, titanium-zirconium-molybdenum (TZM).

Various benefits and advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. An airfoil (100) comprising a cooling hole pattern (52), wherein the cooling hole pattern (52) comprises:
a first filmrow (55-1) comprising:
a first radially outward facing portion (90-1) comprising cooling holes oriented radially outward of an engine central longitudinal axis (x-x) and over a surface of the airfoil (100);
a first radially inward facing portion (92-1) comprising cooling holes oriented radially inward toward the engine central longitudinal axis (x-x') and over the surface of the airfoil (100);
a first transition boundary (110-1) comprising a first point equidistant between the first radially outward facing portion (90-1) and the first radially inward facing portion (92-1); and
a first transition boundary radial position (120-1) comprising a first radial distance of the first transition boundary (110-1) from the engine central longitudinal axis (x-x'); and
a second filmrow (55-2) comprising:
a second radially outward facing portion (90-2) comprising cooling holes oriented radially outward of the engine central longitudinal axis (x-x) and over the surface of the airfoil (100);
a second radially inward facing portion (92-2) comprising cooling holes oriented radially inward toward the engine central longitudinal axis (x-x') and over the surface of the airfoil (100);
a second transition boundary (110-2) comprising a second point equidistant between the second radially outward facing portion (90-2) and the second radially inward facing portion (92-2); and
a second transition boundary radial position (120-2) comprising a second radial distance of the second transition boundary (110-2) from the engine central longitudinal axis (x-x); **characterised in that**
the second transition boundary radial position (120-2) differs by more than one-half pitch from the first transition boundary radial position (120-1), wherein one whole pitch is the radial distance (190-1, 190-2) between individual cooling holes of the first radially outward facing portion (90-1) or the radially inward facing portion (92-1) of the first film row (55-1).

2. The airfoil according to claim 1, further comprising a third filmrow (55-3) comprising:
a third radially outward facing portion (90-3) comprising cooling holes oriented radially outward of the engine central longitudinal axis (x-x) and over the surface of the airfoil (100);
a third radially inward facing portion (92-3) comprising cooling holes oriented radially inward toward the engine central longitudinal axis (x-x') and over the surface of the airfoil (100);
a third transition boundary (110-3) comprising a third point equidistant between the third radially outward facing portion (90-3) and the third radially inward facing portion (92-3); and
a third transition boundary radial position (120-3) comprising a third radial distance of the third transition boundary (110-3) from the engine central longitudinal axis (x-x'),
wherein the third transition boundary radial position (120-3) does not equal the first transition boundary radial position (120-1),
wherein the third transition boundary radial position (120-3) differs by more than one-half pitch from the second transition boundary radial position (120-2).

3. The airfoil according to claim 1, further comprising:
a third filmrow (55-3) comprising:
a third radially outward facing portion (90-3) comprising cooling holes oriented radially outward of the engine central longitudinal axis (x-x) and over the surface of the airfoil (100);
a third radially inward facing portion (92-3) comprising cooling holes oriented radially inward toward the engine central longitudinal axis (x-x') and over the surface of the airfoil (100);
a third transition boundary (110-3) comprising a third point equidistant between the third radially outward facing portion (90-3) and the third radially inward facing portion (92-3); and
a third transition boundary radial position (120-3) comprising a third radial distance of the third transition boundary (110-3) from the engine central longitudinal axis (x-x'),
a fourth filmrow (55-4) comprising:
a fourth radially outward facing portion (90-4) comprising cooling holes oriented radially outward of the engine central longitudinal axis (x-x) and over the surface of the airfoil (100);
a fourth radially inward facing portion (92-4) comprising cooling holes oriented radially inward toward the engine central longitudinal axis (x-x') and over the surface of the airfoil (100);
a fourth transition boundary (110-4) comprising a fourth point equidistant between the fourth radially outward facing portion (90-4) and the fourth radially inward facing portion (92-4); and
a fourth transition boundary radial position (120-4) comprising a fourth radial distance of the fourth transition boundary (110-4) from the engine central longitudinal axis (x-x'),
wherein the third transition boundary radial position (120-3) differs by no more than one-half pitch from the first transition boundary radial position (120-1) whereby the first filmrow (55-1) and the third filmrow (55-3) comprises a first aligned set, and
wherein the second transition boundary radial position (120-2) differs by no more than one-half pitch from the fourth transition boundary radial position (120-4) whereby the second filmrow (55-2) and the fourth filmrow (55-4) comprises a second aligned set.

4. A method of forming an airfoil (100) having a cooling hole pattern (52) in an airfoil (100) comprising:
forming a plurality of filmrows (55-1...55-4) having non-contiguous adjacent transition boundary radial positions (120-1... 120-4), wherein forming each of the plurality of filmrows (55-1...55-4) comprises:
forming a radially outward facing portion (90-1...90-4) comprising cooling holes oriented radially outward of an engine central longitudinal axis (x-x) and over a surface of the airfoil (100);
forming a radially inward facing portion (92-1...92-4) comprising cooling holes oriented radially inward toward the engine central longitudinal axis (x-x) and over the surface of the airfoil (100);
forming a transition boundary (110-1... 110-4) comprising a point equidistant between the radially outward facing portion (90-1...90-4) and the radially inward facing portion (92-1...92-4); and
forming a transition boundary radial position (120-1... 120-4) comprising a radial distance of the transition boundary (110-1... 110-4) from the engine central longitudinal axis (x-x); **characterised in that**
the transition boundary radial position (120-1... 120-4) of each filmrow (55-1...55-4) differs by more than one-half pitch from at least one other filmrow (55-1...55-4) whereby the plurality of filmrows (55-1...55-4) have non-contiguous adjacent transition boundary radial positions (120-1... 120-4), wherein one whole pitch is the radial distance (190-1, 190-2) between individual cooling holes of the radially outward facing portion (90-1...90-4) or the radially inward facing portion (92-1...92-4) of each film row (55-1...55-4).

5. The method according to claim 4,
wherein the transition boundary radial position (120-1... 120-4) of each filmrow (55-1...55-4) differs by more than one-half pitch from one adjacent filmrow (55-1...55-4) whereby the plurality of filmrows (55-1...55-4) have non-contiguous adjacent transition boundary radial positions (120-1... 120-4).

6. The method according to claim 4,
wherein the transition boundary radial position (120-1... 120-4) of each filmrow (55-1...55-4) differs by more than one-half pitch from two adjacent filmrows (55-1...55-4) whereby the plurality of filmrows (55-1...55-4) have non-contiguous adjacent transition boundary radial positions (120-1... 120-4).

7. The method according to claim 4,
wherein the transition boundary radial position (120-1... 120-4) of each filmrow (55-1...55-4) differs by more than one-half pitch from every other filmrow (55-1...55-4) whereby the plurality of filmrows (55-1...55-4) have non-contiguous adjacent transition boundary radial positions (120-1...120-4).

8. The airfoil (100) according to any claim 1-3 or method according to any preceding claim 4-7 wherein the airfoil (100) comprises a stator vane (60), or a rotor blade (70).

## Patentansprüche

1. Turbinenschaufel (100), die ein Kühlungslochmuster (52) umfasst, wobei das Kühlungslochmuster (52) Folgendes umfasst:
eine erste Folienreihe (55-1), die Folgendes umfasst:
einen ersten radial nach außen gewandten Abschnitt (90-1), der Kühllöcher umfasst, die radial nach außen einer durch die Mitte des Triebwerks verlaufenden Längsachse (x-x') und über eine Fläche der Turbinenschaufel (100) ausgerichtet sind;
einen ersten radial nach innen gewandten Abschnitt (92-1), der Kühllöcher umfasst, die radial nach innen zu der durch die Mitte des Triebwerks verlaufenden Längsachse (x-x') und über die Fläche der Turbinenschaufel (100) ausgerichtet sind;
eine erste Übergangsgrenze (110-1), die einen ersten Punkt umfasst, der äquidistant zwischen dem ersten radial nach außen gewandten Abschnitt (90-1) und dem ersten radial nach innen gewandten Abschnitt (92-1) liegt; und
eine Radialposition der ersten Übergangsgrenze (120-1), die eine erste radiale Entfernung der ersten Übergangsgrenze (110-1) von der durch die Mitte des Triebwerks verlaufenden Längsachse (x-x') umfasst; und
eine zweite Folienreihe (55-2), die Folgendes umfasst:
einen zweiten radial nach außen gewandten Abschnitt (90-2), der Kühllöcher umfasst, die radial nach außen der durch die Mitte des Triebwerks verlaufenden Längsachse (x-x') und über die Fläche der Turbinenschaufel (100) ausgerichtet sind;
einen zweiten radial nach innen gewandten Abschnitt (92-2), der Kühllöcher umfasst, die radial nach innen zu der durch die Mitte des Triebwerks verlaufenden Längsachse (x-x') und über die Fläche der Turbinenschaufel (100) ausgerichtet sind;
eine zweite Übergangsgrenze (110-2), die einen zweiten Punkt umfasst, der äquidistant zwischen dem zweiten radial nach außen gewandten Abschnitt (90-2) und dem zweiten radial nach innen gewandten Abschnitt (92-2) liegt; und
eine Radialposition der zweiten Übergangsgrenze (120-2), die eine zweite radiale Entfernung der zweiten Übergangsgrenze (110-2) von der durch die Mitte des Triebwerks verlaufenden Längsachse (x-x') umfasst; **dadurch gekennzeichnet, dass**
sich die Radialposition der zweiten Übergangsgrenze (120-2) um mehr als ein halbe Neigung von der Radialposition der ersten Übergangsgrenze (120-1) unterscheidet, wobei eine ganze Neigung die radiale Entfernung (190-1, 190-2) zwischen einzelnen Kühllöchern des ersten radial nach außen gewandten Abschnitts (90-1) oder des radial nach innen gewandten Abschnitts (92-1) der ersten Folienreihe (55-1) ist.

2. Turbinenschaufel nach Anspruch 1, die ferner eine dritte Folienreihe (55-3) umfasst, die Folgendes umfasst:
einen dritten radial nach außen gewandten Abschnitt (90-3), der Kühllöcher umfasst, die radial nach außen der durch die Mitte des Triebwerks verlaufenden Längsachse (x-x') und über die Fläche der Turbinenschaufel (100) ausgerichtet sind;
einen dritten radial nach innen gewandten Abschnitt (92-3), der Kühllöcher umfasst, die radial nach innen zu der durch die Mitte des Triebwerks verlaufenden Längsachse (x-x') und über die Fläche der Turbinenschaufel (100) ausgerichtet sind;
eine dritte Übergangsgrenze (110-3), die einen dritten Punkt umfasst, der äquidistant zwischen dem dritten radial nach außen gewandten Abschnitt (90-3) und dem dritten radial nach innen gewandten Abschnitt (92-3) liegt; und
eine Radialposition der dritten Übergangsgrenze (120-3), die eine dritte radiale Entfernung der dritten Übergangsgrenze (110-3) von der durch die Mitte des Triebwerks verlaufenden Längsachse (x-x') umfasst,
wobei die Radialposition der dritten Übergangsgrenze (120-3) nicht der Radialposition der ersten Übergangsgrenze (120-1) entspricht,
wobei sich die dritte Radialposition der Übergangsgrenze (120-3) um mehr als eine halbe Neigung von der Radialposition der zweiten Übergangsgrenze (120-2) unterscheidet.

3. Turbinenschaufel nach Anspruch 1, die ferner Folgendes umfasst:
eine dritte Folienreihe (55-3), die Folgendes umfasst:
einen dritten radial nach außen gewandten Abschnitt (90-3), der Kühllöcher umfasst, die radial nach außen der durch die Mitte des Triebwerks verlaufenden Längsachse (x-x') und über die Fläche der Turbinenschaufel (100) ausgerichtet sind;
einen dritten radial nach innen gewandten Abschnitt (92-3), der Kühllöcher umfasst, die radial nach innen zu der durch die Mitte des Triebwerks verlaufenden Längsachse (x-x') und über die Fläche der Turbinenschaufel (100) ausgerichtet sind;
eine dritte Übergangsgrenze (110-3), die einen dritten Punkt umfasst, der äquidistant zwischen dem dritten radial nach außen gewandten Abschnitt (90-3) und dem dritten radial nach innen gewandten Abschnitt (92-3) liegt; und
eine Radialposition der dritten Übergangsgrenze (120-3), die eine dritte radiale Entfernung der dritten Übergangsgrenze (110-3) von der durch die Mitte des Triebwerks verlaufenden Längsachse (x-x') umfasst,
eine vierte Folienreihe (55-4), die Folgendes umfasst:
einen vierten radial nach außen gewandten Abschnitt (90-4), der Kühllöcher umfasst, die radial nach außen der durch die Mitte des Triebwerks verlaufenden Längsachse (x-x') und über die Fläche der Turbinenschaufel (100) ausgerichtet sind;
einen vierten radial nach innen gewandten Abschnitt (92-4), der Kühllöcher umfasst, die radial nach innen zu der durch die Mitte des Triebwerks verlaufenden Längsachse (x-x') und über die Fläche der Turbinenschaufel (100) ausgerichtet sind;
eine vierte Übergangsgrenze (110-4), die einen vierten Punkt umfasst, der äquidistant zwischen dem vierten radial nach außen gewandten Abschnitt (90-4) und dem vierten radial nach innen gewandten Abschnitt (92-4) liegt; und
eine Radialposition der vierten Übergangsgrenze (120-4), die eine vierte radiale Entfernung der vierten Übergangsgrenze (110-4) von der durch die Mitte des Triebwerks verlaufenden Längsachse (x-x') umfasst,
wobei sich die Radialposition der dritten Übergangsgrenze (120-3) um nicht mehr als eine halbe Neigung von der Radialposition der ersten Übergangsgrenze (120-1) unterscheidet, wobei die erste Folienreihe (55-1) und die dritte Folienreihe (55-3) einen ersten ausgerichteten Satz umfassen, und
wobei sich die Radialposition der zweiten Übergangsgrenze (120-2) um nicht mehr als eine halbe Neigung von der Radialposition der vierten Übergangsgrenze (120-4) unterscheidet, wobei die zweite Folienreihe (55-2) und die vierte Folienreihe (55-4) einen zweiten ausgerichteten Satz umfassen.

4. Verfahren zum Bilden einer Turbinenschaufel (100), die ein Kühlungslochmuster (52) in einer Turbinenschaufel (100) aufweist, das Folgendes umfasst:
Bilden einer Vielzahl von Folienreihen (55-1...55-4), die nicht durchgängige benachbarte Radialpositionen von Übergangsgrenzen (120-1...120-4) aufweisen, wobei Bilden von jeder der Vielzahl von Folienreihen (55-1...55-4) Folgendes umfasst:
Bilden eines radial nach außen gewandten Abschnitts (90-1...90-4), der Kühlungslöcher umfasst, die radial nach außen einer durch die Mitte eines Triebwerks verlaufenden Längsachse (x-x') und über eine Fläche der Turbinenschaufel (100) ausgerichtet sind;
Bilden eines radial nach innen gewandten Abschnitts (92-1...92-4), der Kühlungslöcher umfasst, die radial nach innen der durch die Mitte eines Triebwerks verlaufenden Längsachse (x-x') und über die Fläche der Turbinenschaufel (100) ausgerichtet sind;
Bilden einer Übergangsgrenze (110-1...110-4), die einen Punkt umfasst, der äquidistant zwischen dem radial nach außen gewandten Abschnitt (90-1...90-4) und dem radial nach innen gewandten Abschnitt (92-1...92-4) liegt; und
Bilden einer Radialposition der Übergangsgrenze (120-1...120-4), die eine radiale Entfernung der Übergangsgrenze (110-1...110-4) von der durch die Mitte des Triebwerks verlaufenden Längsachse (x-x') umfasst; **dadurch gekennzeichnet, dass**
sich die Radialposition der Übergangsgrenze (120-1...120-4) von jeder Folienreihe (55-1...55-4) um mehr als ein halbe Neigung von mindestens einer anderen Folienreihe (55-1...55-4) unterschiedet, wobei die Vielzahl von Folienreihen (55-1...55-4) nicht durchgängige benachbarte Radialpositionen der Übergangsgrenze (120-1...120-4) aufweisen, wobei eine ganze Neigung die radiale Entfernung (190-1, 190-2) zwischen einzelnen Kühllöchern des radial nach außen gewandten Abschnitts (90-1...90-4) oder des radial nach innen gewandten Abschnitts (92-1...92-4) von jeder Folienreihe (55-1...55-4) ist.

5. Verfahren nach Anspruch 4,
wobei sich die Radialposition der Übergangsgrenze (120-1...120-4) von jeder Folienreihe (55-1...55-4) um mehr als eine halbe Neigung von einer benachbarten Folienreihe (55-1...55-4) unterscheidet, wobei die Vielzahl von Folienreihen (55-1...55-4) nicht durchgängige benachbarte Radialpositionen der Übergangsgrenze (120-1...120-4) aufweisen.

6. Verfahren nach Anspruch 4,
wobei sich die Radialposition der Übergangsgrenze (120-1...120-4) von jeder Folienreihe (55-1...55-4) um mehr als eine halbe Neigung von zwei benachbarten Folienreihen (55-1...55-4) unterschiedet, wobei die Vielzahl von Folienreihen (55-1...55-4) nicht durchgängige benachbarte Radialpositionen der Übergangsgrenze (120-1...120-4) aufweisen.

7. Verfahren nach Anspruch 4,
wobei sich die Radialposition der Übergangsgrenze (120-1...120-4) von jeder Folienreihe (55-1...55-4) um mehr als eine halbe Neigung von jeder anderen Folienreihe (55-1...55-4) unterschiedet, wobei die Vielzahl von Folienreihen (55-1...55-4) nicht durchgängige benachbarte Radialpositionen der Übergangsgrenze (120-1...120-4) aufweisen.

8. Turbinenschaufel (100) nach einem der Ansprüche 1-3 oder Verfahren nach einem der vorhergehenden Ansprüche 4-7, wobei die Turbinenschaufel (100) eine Statorschaufel (60) und ein Rotorblatt (70) umfasst.

## Revendications

1. Profil aérodynamique (100) comprenant un motif à trous de refroidissement (52), dans lequel le motif à trous de refroidissement (52) comprend :
une première rangée de film (55-1) comprenant :
une première portion tournée radialement vers l'extérieur (90-1) comprenant des trous de refroidissement orientés radialement vers l'extérieur d'un axe longitudinal central de moteur (x-x) et sur une surface du profil aérodynamique (100) ;
une première portion tournée radialement vers l'intérieur (92-1) comprenant des trous de refroidissement orientés radialement vers l'intérieur vers l'axe longitudinal central de moteur (x-x) et sur la surface du profil aérodynamique (100) ;
une première limite de transition (110-1) comprenant un premier point équidistant entre la première portion tournée radialement vers l'extérieur (90-1) et la première portion tournée radialement vers l'intérieur (92-1) ; et
une première position radiale de limite de transition (120-1) comprenant une première distance radiale de la première limite de transition (110-1) de l'axe longitudinal central de moteur (x-x) ; et
une deuxième rangée de film (55-2) comprenant :
une deuxième portion tournée radialement vers l'extérieur (90-2) comprenant des trous de refroidissement orientés radialement vers l'extérieur de l'axe longitudinal central de moteur (x-x) et sur la surface du profil aérodynamique (100) ;
une deuxième portion tournée radialement vers l'intérieur (92-2) comprenant des trous de refroidissement orientés radialement vers l'intérieur vers l'axe longitudinal central de moteur (x-x) et sur la surface du profil aérodynamique (100) ;
une deuxième limite de transition (110-2) comprenant un deuxième point équidistant entre la deuxième portion tournée radialement vers l'extérieur (90-2) et la deuxième portion tournée radialement vers l'intérieur (92-2) ; et
une deuxième position radiale de limite de transition (120-2) comprenant une deuxième distance radiale de la deuxième limite de transition (110-2) de l'axe longitudinal central de moteur (x-x) ; **caractérisé en ce que**
la deuxième position radiale de limite de transition (120-2) diffère de plus d'un demi pas de la première position radiale de limite de transition (120-1), dans lequel un pas entier est la distance radiale (190-1, 190-2) entre des trous de refroidissement individuels de la première portion tournée radialement vers l'extérieur (90-1) ou de la portion tournée radialement vers l'intérieur (92-1) de la première rangée de film (55-1).

2. Profil aérodynamique selon la revendication 1, comprenant en outre une troisième rangée de film (55-3) comprenant :
une troisième portion tournée radialement vers l'extérieur (90-3) comprenant des trous de refroidissement orientés radialement vers l'extérieur de l'axe longitudinal central de moteur (x-x) et sur la surface du profil aérodynamique (100) ;
une troisième portion tournée radialement vers l'intérieur (92-3) comprenant des trous de refroidissement orientés radialement vers l'intérieur vers l'axe longitudinal central de moteur (x-x) et sur la surface du profil aérodynamique (100) ;
une troisième limite de transition (110-3) comprenant un troisième point équidistant entre la troisième portion tournée radialement vers l'extérieur (90-3) et la troisième portion tournée radialement vers l'intérieur (92-3) ; et
une troisième position radiale de limite de transition (120-3) comprenant une troisième distance radiale de la troisième limite de transition (110-3) de l'axe longitudinal central de moteur (x-x),
dans lequel la troisième position radiale de limite de transition (120-3) n'est pas égale à la première position radiale de limite de transition (120-1),
dans lequel la troisième position radiale de limite de transition (120-3) diffère de plus d'un demi pas de la deuxième position radiale de limite de transition (120-2).

3. Profil aérodynamique selon la revendication 1, comprenant en outre :
une troisième rangée de film (55-3) comprenant :
une troisième portion tournée radialement vers l'extérieur (90-3) comprenant des trous de refroidissement orientés radialement vers l'extérieur de l'axe longitudinal central de moteur (x-x) et sur la surface du profil aérodynamique (100) ;
une troisième portion tournée radialement vers l'intérieur (92-3) comprenant des trous de refroidissement orientés radialement vers l'intérieur vers l'axe longitudinal central de moteur (x-x) et sur la surface du profil aérodynamique (100) ;
une troisième limite de transition (110-3) comprenant un troisième point équidistant entre la troisième portion tournée radialement vers l'extérieur (90-3) et la troisième portion tournée radialement vers l'intérieur (92-3) ; et
une troisième position radiale de limite de transition (120-3) comprenant une troisième distance radiale de la troisième limite de transition (110-3) de l'axe longitudinal central de moteur (x-x),
une quatrième rangée de film (55-4) comprenant :
une quatrième portion tournée radialement vers l'extérieur (90-4) comprenant des trous de refroidissement orientés radialement vers l'extérieur de l'axe longitudinal central de moteur (x-x) et sur la surface du profil aérodynamique (100) ;
une quatrième portion tournée radialement vers l'intérieur (92-4) comprenant des trous de refroidissement orientés radialement vers l'intérieur vers l'axe longitudinal central de moteur (x-x) et sur la surface du profil aérodynamique (100) ;
une quatrième limite de transition (110-4) comprenant un quatrième point équidistant entre la quatrième portion tournée radialement vers l'extérieur (90-4) et la quatrième portion tournée radialement vers l'intérieur (92-4) ; et
une quatrième position radiale de limite de transition (120-4) comprenant une quatrième distance radiale de la quatrième limite de transition (110-4) de l'axe longitudinal central de moteur (x-x),
dans lequel la troisième position radiale de limite de transition (120-3) diffère de pas plus d'un demi pas de la première position radiale de limite de transition (120-1) moyennant quoi la première rangée de film (55-1) et la troisième rangée de film (55-3) comprennent un premier ensemble aligné, et
dans lequel la deuxième position radiale de limite de transition (120-2) diffère de pas plus d'un demi pas de la quatrième position radiale de limite de transition (120-4) moyennant quoi la deuxième rangée de film (55-2) et la quatrième rangée de film (55-4) comprennent un deuxième ensemble aligné.

4. Procédé de formation d'un profil aérodynamique (100) aérodynamique (100) ayant un motif à trous de refroidissement (52) dans un profil aérodynamique (100) comprenant :
la formation d'une pluralité de rangées de film (55-1...55-4) ayant des positions radiales de limite de transition adjacentes non contiguës (120-1...120-4), dans lequel la formation de chacune de la pluralité de rangées de film (55-1...55-4) comprend ;
la formation d'une portion tournée radialement vers l'extérieur (90-1...90-4) comprenant des trous de refroidissement orientés radialement vers l'extérieur d'un axe longitudinal central de moteur (x-x) et sur une surface du profil aérodynamique (100) ;
la formation d'une portion tournée radialement vers l'intérieur (92-1...92-4) comprenant des trous de refroidissement orientés radialement vers l'intérieur vers l'axe longitudinal central de moteur (x-x) et sur la surface du profil aérodynamique (100) ;
la formation d'une limite de transition (110-1...110-4) comprenant un point équidistant entre la portion tournée radialement vers l'extérieur (90-1...90-4) et la portion tournée radialement vers l'intérieur (92-1...92-4) ; et
la formation d'une position radiale de limite de transition (120-1...120-4) comprenant une distance radiale de la limite de transition (110-1...110-4) de l'axe longitudinal central de moteur (x-x) ; **caractérisé en ce que**
la position radiale de limite de transition (120-1...120-4) de chaque rangée de film (55-1...55-4) diffère de plus d'un demi pas d'au moins une autre rangée de film (55-1...55-4) moyennant quoi la pluralité de rangées de film (55-1...55-4) ont des positions radiales de limite de transition adjacentes non contiguës (120-1...120-4), dans lequel un pas entier est la distance radiale (190-1, 190-2) entre des trous de refroidissement individuels de la portion tournée radialement vers l'extérieur (90-1...90-4) ou de la portion tournée radialement vers l'intérieur (92-1...92-4) de chaque rangée de film (55-1...55-4).

5. Procédé selon la revendication 4,
dans lequel la position radiale de limite de transition (120-1...120-4) de chaque rangée de film (55-1...55-4) diffère de plus d'un demi pas d'au moins une autre rangée de film (55-1...55-4) moyennant quoi la pluralité de rangées de film (55-1...55-4) ont des positions radiales de limite de transition adjacentes non contiguës (120-1...120-4).

6. Procédé selon la revendication 4,
dans lequel la position radiale de limite de transition (120-1...120-4) de chaque rangée de film (55-1...55-4) diffère de plus d'un demi pas de deux rangées de film adjacentes (55-1...55-4) moyennant quoi la pluralité de rangées de film (55-1...55-4) ont des positions radiales de limite de transition adjacentes non contiguës (120-1...120-4).

7. Procédé selon la revendication 4,
dans lequel la position radiale de limite de transition (120-1...120-4) de chaque rangée de film (55-1...55-4) diffère de plus d'un demi pas de chaque autre rangée de film (55-1...55-4) moyennant quoi la pluralité de rangées de film (55-1...55-4) ont des positions radiales de limite de transition adjacentes non contiguës (120-1...120-4).

8. Profil aérodynamique (100) selon une quelconque revendication 1-3 ou procédé selon une quelconque revendication 4-7,
dans lequel le profil aérodynamique (100) comprend une aube de stator (60), ou une pale de rotor (70).
